# EUROPÄISCHE PATENTSCHRIFT

(11) **EP 3 775 974 B1**
(45) Veröffentlichungstag und Bekanntmachung des Hinweises auf die Patenterteilung: **13.08.2025**
(21) Anmeldenummer: 19702446.6
(22) Anmeldetag: 31.01.2019
(51) Int. Cl.: G01S 7/40, G01S 13/931, G01S 7/35, G01S 7/00, G01S 13/87

(54) **RADARSENSORKOPF FÜR EIN RADARSYSTEM**
RADAR SENSOR HEAD FOR A RADAR SYSTEM
SONDE RADAR D'UN SYSTÈME RADAR

(30) Priorität: 05.04.2018 DE 102018205125
(43) Veröffentlichungstag der Anmeldung: 17.02.2021
(73) Patentinhaber: Robert Bosch GmbH, 70442 Stuttgart (DE)
(72) Erfinder: MAYER, Marcel, 89173 Lonsee (DE); SCHOOR, Michael, 70195 Stuttgart (DE)
(86) Internationale Anmeldenummer: PCT/EP2019/052332
(87) Internationale Veröffentlichungsnummer: WO 2019/192762

(56) Entgegenhaltungen:
- EP-A1- 2 090 897
- EP-A1- 2 455 779
- EP-A1- 3 165 944
- WO-A1-2015/176884
- DE-A1- 102007 045 561
- DE-A1- 102012 024 880
- DE-A1- 102012 220 311

## Beschreibung

Die Erfindung betrifft einen Radarsensorkopf für ein Radarsystem. Die Erfindung betrifft ferner ein Radarsystem.

### Stand der Technik

Die Offenlegungsschrift DE 10 2007 045 561 A1 offenbart ein Fahrerassistenzsystem.

Die Offenlegungsschrift DE 10 2012 220 311 A1 offenbart ein Verfahren zur Detektion der Sensordegradation bei Abstandssensoren.

Die Offenlegungsschrift EP 2 090 897 A1 offenbart ein Fahrerassistenzsystem eines Fahrzeugs.

Die Offenlegungsschrift DE 10 2012 024 880 A1 offenbart ein Verfahren zum Feststellen der Authentizität eines Ultraschallsensors eines Kraftfahrzeugs.

Die Offenlegungsschrift EP 3 165 944 A1 offenbart ein Radarkommunikationsverfahren.

Die Offenlegungsschrift WO 2015/176884 A1 offenbart eine Parkassistenzvorrichtung für ein Kraftfahrzeug.

Die Offenlegungsschrift EP 2 455 779 A1 offenbart eine ultraschallbasierte Richtungsbestimmung von Objekten in einer Fahrzeugumgebung.

Bei Fahrzeuge mit einem hohem Level an Fahrerassistenzfunktionen oder automatisierten Fahrfunktion werden immer mehr Radarsensoren verbaut. Durch eine höhere Anzahl an Radarsensoren wird eine höhere Leistungsfähigkeit der automatisierten oder teilautomatisierten Fall Funktionen gegenüber einzelnen Radarsensoren angestrebt. Bisherige Lösungen in diesem Bereich bestehen aus Radarsensoren, welche sensorintern umfangreiche Datenverarbeitung der empfangenen Radarwellen durchführen. Somit können die Radarsensoren Daten auf Objekt- oder Ortungsebene für eine weitere Auswertung durch das Fahrzeug liefern. Hierdurch kann die an das Fahrzeug übertragene Datenmenge reduziert werden, jedoch müssen die jeweiligen Radarsensoren eine höhere Rechenleistung und einen größeren Speicher aufweisen.

Nachteilig ist hierbei, dass die Rechenleistung und die Speichergröße verhältnismäßig ungünstig in Bezug auf gesteigerte Leistungsfähigkeit skalierbar sind. Dies resultiert insbesondere daraus, dass ausgehend von einer definierten Anforderung an die Leistungsfähigkeit die Mikrocontroller-Technologie für die notwendigen Verarbeitungsschritte der empfangenen Radarwellen nicht mehr ausreicht. Daher müssen zum Steigern der Leistungsfähigkeit die notwendigen Berechnungen und Analysen sensorintern im Rahmen von Mikroprozessor-technologien durchgeführt werden. Dies kann sich nachteilig auf einen Preis, eine Größe und auf Verlustleistungen eines Radarsensors auswirken.

### Offenbarung der Erfindung

Die der Erfindung zugrunde liegende Aufgabe kann darin gesehen werden, einen Radarsensorkopf für ein Radarsystem vorzuschlagen, welches preiswert und flexibel im Hinblick auf die Anzahl der verwendeten Elemente skalierbar ist.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Gemäß einem ersten Aspekt wird die Aufgabe gelöst mit einem Radarsensorkopf für ein Radarsystem mit den Merkmalen des Anspruchs 1, aufweisend:
- mindestens eine Sendeantenne zum Erzeugen und mindestens eine Empfangsantenne zum Empfangen von Radarwellen;
- eine Schnittstelle zum Anschließen des Radarsensorkopfs an eine Datenleitung; und
- eine Identifizierungseinheit zum Identifizieren des Radarsensorkopfs, wobei mittels der Identifizierungseinheit ein Herunterladen von Kalibrierdaten des Sensorkopfs auf eine zentrale Steuervorrichtung initiierbar ist.

Beim erfindungsgemäßen Radarsensorkopf wird auf diese Weise eine ohnehin erforderliche erfindungsgemäße Authentifizierung mit einem Download von erforderlichen Kalibrierdaten auf das zentrale Steuergerät erfindungsgemäß kombiniert. Die Kalibrierdaten entsprechen dabei dem jeweiligen Radarsensorkopf und sind wesentlich für eine ordnungsgemäße Funktionalität des Radarsensorkopfs. Vorteilhaft kann auf diese Art und Weise Speicheraufwand im Radarsensorkopf für die Kalibrierdaten eingespart werden. Vorteilhaft ist dadurch unterstützt, dass ein Sensorkopfhersteller die Kalibrierdaten auf den Server hochladen kann, die dann bei Bedarf (zum Beispiel anlässlich eines Werkstattaufenthalts) auf das zentrale Steuergerät heruntergeladen werden. Auf diese Weise ist eine einfache Installation und Wartung von Radarsensorköpfen unterstützt.

Auf diese Weise wird vorteilhaft eine Partitionierung des Gesamtsystems durch Bereitstellung eines Radarsensorkopfs ermöglicht.

Heutige Radarsensoren werden häufig als Fast-Chirp-Radar ausgelegt. Das bedeutet, dass viele schnelle FMCW (Frequency Modulated Continuous Wave)-Rampen in einen Abtastbereich gesendet werden, was auch als eine sogenannte Chirp Sequenz oder als ein Rapid Chirp Verfahren bezeichnet wird. Nach der Mischung der empfangenen Radarsignale werden die Basisbandsignale gefiltert, digitalisiert und allgemein einer 2D-Fouriertransformation zugeführt. Da eine anschließende Doppler-FFT (Fast-Fourier-Transformation) erst stattfinden kann, wenn die Daten bzw. Messsignale aller Rampen bzw. Frequenzen verarbeitet wurden, ist ein großer Speicher zum Puffern der empfangenen Radarsignale notwendig. Darüber hinaus besteht aufgrund der hohen Latenzanforderung ein Bedarf an einer hohen Rechenleistung, weswegen üblicherweise Hardwarebeschleuniger eingesetzt werden.

Unter dem Aspekt, dass mehrere Radarsensoren in einem Fahrzeug eingesetzt werden ist es vorteilhaft die benötigte Rechenleistung in mindestens einem zentralen Steuergerät zu konzentrieren. Die jeweiligen Radarsensoren können somit als kompakte und preiswerte Radarsensorköpfe ohne signifikante Verlustleistungen gestaltet sein. Dadurch kann insgesamt ein besseres Preis-Leistungs-Verhältnis erzielt und eine höhere Leistungsfähigkeit des Radarsystems realisiert werden.

Ein vorgeschlagener Radarsensorkopf weist Komponenten zum Erzeugen und Senden von Radarwellen sowie Komponenten zum Empfangen und Verarbeiten von empfangenen Radarwellen auf. Die Verarbeitung der empfangenen Radarwellen beschränkt sich hierbei auf ein möglichst geringes Maß bzw. findet mit einem möglichst geringen Aufwand statt. Insbesondere können die Messdaten der empfangenen Radarwellen durch den Analog-Digital-Wandler digitalisiert und anschließend mit einer hohen Bandbreite an das mindestens eine zentrale Steuergerät übertragen werden. Die Weiterverarbeitung der digitalisierten Messdaten von dem mindestens einen Radarsensorkopf kann anschließend im zentralen Steuergerät erfolgen.

Hierdurch können die Kosten für die jeweiligen Radarsensorköpfe reduziert werden, da weniger Rechenleistung in den Radarsensorköpfen notwendig ist. Darüber hinaus kann eine geringere Verlustleistung in den jeweiligen Radarsensorköpfen aufgrund der geringeren Anzahl an Verarbeitungsschritten anfallen. Zwar steigt der Rechenaufwand in der mindestens einen zentralen Steuervorrichtung, jedoch kann hierbei die Rechenleistung im Vergleich zu den anfallenden Kosten leichter bzw. mit einem geringeren Aufwand skaliert werden. Bei einer Gesamtbetrachtung des Radarsystems kann das erfindungsgemäße Radarsystem preiswert und flexibel gegenüber bisherigen Lösungen erweitert und skaliert werden. Des Weiteren können durch die höhere Rechenleistung der mindestens einen zentralen Steuervorrichtung komplexere und leistungsfähigere Algorithmen zum Verarbeiten der empfangenen Radarwellen eingesetzt werden.

Mit zunehmender Hochintegration ist es zusätzlich möglich, in einen Hochfrequenzbaustein wie beispielsweise einen so genannten Monolithic Microwave Integrated Circuit (MMIC) eine erste Verarbeitungsstufe zu integrieren. Dies kann vorzugsweise eine Analyseeinheit zum Durchführen einer Fourier-Analyse sein.

Beispielsweise kann die Analyseeinheit eine Range FFT der digitalisierten Messdaten durchführen. Abhängig von den verwendeten Modulationsverfahren können auch andere Fourier-Transformationen verwendet werden. Diese erste Verarbeitungsstufe ist in der Regel preiswert in die bestehenden Komponenten eines Radarsensorkopfes integrierbar, da die benötigte Fläche im Hochfrequenzbaustein sehr gering ist und ein geringer Speicherbedarf besteht. Somit kann bei der Herstellung des entsprechenden Hochfrequenzbausteins die verwendete Siliziumfläche üblicherweise gleich bleiben.

Eine bevorzugte Ausführungsform des Radarsensorkopfs zeichnet sich dadurch aus, dass er ferner eine Vorverarbeitungseinheit zum definierten Vorverarbeiten von Empfangsdaten aufweist. Dadurch wird vorteilhaft eine höhere Systemintegration innerhalb des Radarsensorkopfs bereitgestellt.

Eine weitere bevorzugte Ausführungsform des Radarsensorkopfs zeichnet sich dadurch aus, dass die Kalibrierdaten mittels der Identifizierungseinheit aktualisierbar sind. Dadurch ist beispielsweise unterstützt, dass der Radarsensorkopf zwar im System verbleibt, jedoch neue Funktionalitäten implementiert werden, die nur durch neue Kalibrierdaten möglich sind.

Eine weitere bevorzugte Ausführung des Radarsensorkopfs ist dadurch gekennzeichnet, dass das Herunterladen der Kalibrierdaten drahtlos oder drahtgebunden durchführbar ist. Auf diese Weise ist es möglich, das Herunterladen der Kalibrierdaten mit unterschiedlichen Technologien durchzuführen, wodurch unterschiedliche Gegebenheiten berücksichtigt werden können (z.B. stationärer Aufenthalt des Fahrzeugs, Fahrbetrieb des Fahrzeugs, usw.)

Der erfindungsgemäße Radarsensorkopf zeichnet sich dadurch aus, dass im Zusammenhang mit dem Herunterladen der Kalibrierdaten eine Freischaltung des Radarsensorkopfs durchführbar ist. Auf diese Weise ist vorteilhaft unterstützt, dass der Radarsensorkopf nur autorisiert verwendet wird und ein Missbrauch dadurch weitgehend ausgeschlossen ist.

Der erfindungsgemäße Radarsensorkopf zeichnet sich dadurch aus, dass mittels der Identifizierungseinheit eine Sensor-ID übertragbar ist. Auf diese Weise wird eine einfache Art einer Identifizierung des Radarsensorkopfs realisiert, mittels der ein weiterer Zugriffsschutz für den Radarsensorkopf realisiert wird.

Eine weitere bevorzugte Ausführungsform des Radarsensorkopfs zeichnet sich dadurch aus, dass mittels der Identifizierungseinheit die Sensor-ID verschlüsselt oder signiert übertragbar ist. Auf diese Weise wird eine weitere Maßnahme realisiert, mittels der ein verbesserter Zugriffsschutz für den Radarsensorkopf realisiert wird.

Eine weitere bevorzugte Ausführungsform des Radarsensorkopfs zeichnet sich dadurch aus, dass als Sensor-ID ein Public Key eines Verschlüsselungsverfahrens übertragbar ist. Auf diese Weise kann eine geeignete Verschlüsselungsmethode genutzt werden, mittels der eine sichere Identifizierung bzw. Authentifizierung des Radarsensorkopfs durchgeführt wird.

Der erfindungsgemäße Radarsensorkopf ist dadurch gekennzeichnet, dass die Kalibrierdaten wenigstens eines aus Folgendem sind: typisches Rauschniveau, Antenneneigenschaften, Amplituden/Phasenabweichungen, Position der Antennenelemente, Temperatureigenschaften, Temperaturgang. Auf diese Weise können im Betrieb des Radarsensorkopfs vorteilhaft unterschiedliche Eigenschaften der Antennen bzw. des Sensors kompensiert bzw. angepasst werden.

Eine weitere bevorzugte Ausführungsform des Radarsensorkopfs ist dadurch gekennzeichnet, dass die von der mindestens einen Empfangsantenne empfangenen Radarwellen durch einen in einer Auswerteeinheit des Radarsensorkopfes angeordneten Analog-Digital-Wandler in digitale Messdaten wandelbar und mit mindestens einer Zeitinformation markierbar sind. Auf diese Weise können Empfangssequenzen zeitlich genau zugeordnet werden, was eine genaue Verarbeitung der Messdaten unterstützt.

Im Folgenden werden anhand von stark vereinfachten schematischen Darstellungen bevorzugte Ausführungsbeispiele der Erfindung näher erläutert.

Dabei zeigen:
- Fig. 1: eine schematische Darstellung eines vorgeschlagenen Radarsensorkopfs;
- Fig. 2: eine schematische Darstellung eines Radarsystems mit einer Ausführungsform eines vorgeschlagenen Radarsensorkopfs; und
- Fig. 3: eine schematische Darstellung eines Verfahrens zum Herstellen eines Radarsensorkopfs, welches nicht Teil der Erfindung ist.

In den Figuren weisen dieselben konstruktiven Elemente jeweils dieselben Bezugsziffern auf.

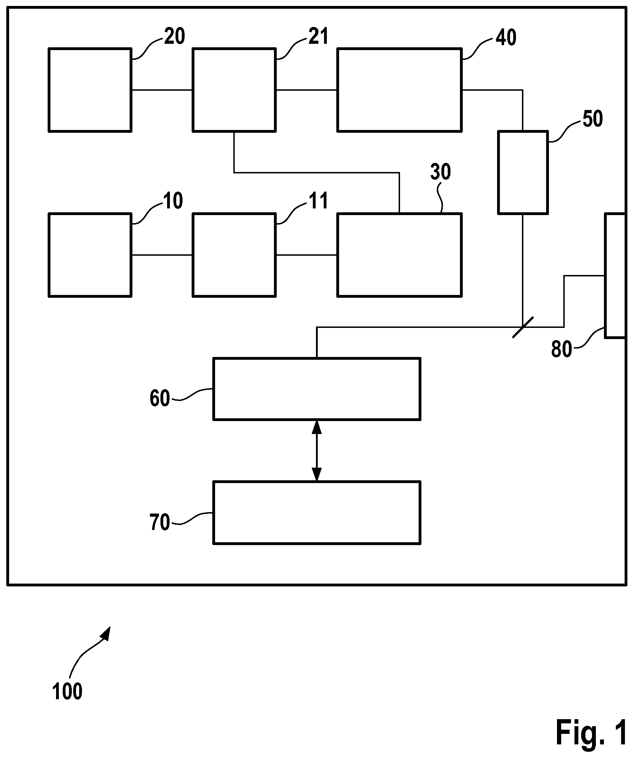

Fig. 1 zeigt eine schematische Darstellung eines vorgeschlagenen Radarsensorkopfs 100. Der Radarsensorkopf 100 weist wenigstens eine Sendeantenne 10 auf, die über eine zugeordnete Antennensteuerung 11 betreibbar ist. Die Antennensteuerung 11 ist unter anderem mit mindestens einem Oszillator bzw. Synthesizer 30 zum Erzeugen einer Trägerfrequenz der Radarwellen gekoppelt.

Ferner ist mindestens eine Empfangsantenne 20 mit einer zugeordneten Antennensteuerung 21 verbunden. Die Antennensteuerung 21 ist funktional mit einer Auswerteeinheit 40 verbunden, wobei empfangene Radarwellen mittels eines in der Auswerteeinheit 40 angeordneten A/D-Wandlers in digitale Messdaten umgewandelt werden und anschließend in einem ersten Verarbeitungsschritt mittels einer Vorverarbeitungseinheit 50 transformiert werden. Die von der Empfangsantenne 20 des Radarsensorkopfes 100 empfangenen Radarwellen sind durch den Analog-Digital-Wandler der Auswerteeinheit in digitale Messdaten wandelbar und mit mindestens einer Zeitinformation markierbar. Dadurch werden die empfangenen Radarwellen bzw. Messdaten in ein digitales Format umgewandelt und können somit einfacher weiterverarbeitet werden. Vorteilhafterweise können die in das digitale Format umgewandelten Messdaten mit einem Zeitstempel versehen werden, wobei z.B. jedes aufgezeichnete Spektrum einen eigenen Zeitstempel erhalten kann.

Mit Hilfe der Vorverarbeitungseinheit 50 ist vorzugsweise eine schnelle Fourier-Transformation (Fast-Fourier-Transformation) durchführbar. Auf diese Weise werden die Abtastwerte bzw. empfangenen Radarwellen nach dem Digitalisieren nicht direkt übertragen, sondern einem ersten Verarbeitungsprozess unterzogen. Die schnelle Fourier-Transformation ist vorzugsweise eine Range-FFT, welche an den jeweiligen Verwendungszweck angepasst sein kann. Dabei repräsentiert die Range-FFT eine erste Dimension der FFT, bei der der Doppler-Effekt eine völlig untergeordnete Rolle spielt und resultierende Frequenz-Bins daher im Wesentlichen vollständig entfernungsabhängig sind.

Da diese Transformation verhältnismäßig wenig Speicher benötigt, kann die Vorverarbeitungseinheit 50 beispielsweise in RFCMOS-Technologie hergestellt und in einen MMIC, wie einen Hochfrequenzbaustein des Radarsensorkopfes 100 integriert werden. Da aufgrund des Anti-Aliasing-Filters nicht alle Range-Bins benötigt werden, beispielsweise 90% oder 45% der Bins, kann hierbei die resultierende Datenmenge reduziert werden und die FFT gleichzeitig als Puffer zur Reduktion von Spitzendatenraten des Radarsensorkopfes 100 genutzt werden.

Man erkennt im Radarsensorkopf 100 ferner erfindungsgemäß eine Identifizierungseinheit 70, mit der der Radarsensorkopf 100 sich gegenüber einer zentralen Steuervorrichtung ("Zentralsteuergerät", nicht dargestellt) erfindungsgemäß authentifiziert. Die Identifizierungseinheit 70 ist erfindungsgemäß ausgebildet, mit einem Authentifizieren gegenüber der zentralen Steuervorrichtung ein Herunterladen von Kalibrierdaten auf die zentrale Steuervorrichtung zu initiieren. Dadurch wird vorteilhaft erreicht, dass erfindungsgemäß ein Authentifizierungsschritt zugleich mit dem Herunterladen von für den Radarsensorkopf 100 passenden Kalibrierdaten verbunden werden kann, die im operativen Betrieb von der zentralen Steuervorrichtung verwendet werden. Auf diese Weise ist es vorteilhaft nicht erforderlich, auf dem Radarsensorkopf 100 die Kalibrierdaten in einem Speicher vorzuhalten.

Im Ergebnis ist dadurch erreicht, dass die Kalibrierdaten im Radarsensorkopf 100 nicht vorgehalten werden müssen, sondern ein Abruf der Kalbrierdaten aus Sicht der zentralen Steuervorrichtung zentralisiert werden kann. Im Radarsensorkopf 100 wird daher nur die Identifizierungseinheit vorgehalten um den Radarsensorkopf 100 zu authentifizieren, wobei die Kalibrierdaten dann von der zentralen Steuervorrichtung aus der Cloud geholt, die z.B. als ein Server einer Werkstatt, des Fahrzeugherstellers oder des Herstellers des Radarsensorkopfs ausgebildet ist. Die Kalibrierdaten werden am genannten Server vorzugsweise in einer Datenbank vorgehalten. Auf einfache Weise ist ein Zugriff auf den Server über einen Netzwerk- bzw. Internetzugriff möglich. Vorteilhaft kann auf diese Weise der Speicher im Radarsensorkopf entfallen, was diesen kostengünstiger macht. Vorteilhaft können die genannten Kalibrierdaten auch von Zeit zu Zeit aktualisiert werden, wodurch z.B. neue Funktionalitäten für den Radarsensorkopf realisierbar sind.

Mittels der Identifizierungseinheit 70 wird eine Sensor-ID des Radarsensorkopfs 100 während des Identifiziervorgangs z.B. verschlüsselt oder signiert übertragen, um einen weiteren Zugriffsschutz zu erzielen. Denkbar ist es auch, als Sensor-ID einen Public Key eines verwendeten Verschlüsselungsverfahrens zu verwenden, wobei auf diese Weise noch ein verbesserter Schutz gegen Manipulation bzw. Missbrauch gegeben ist.

Erfindungsgemäß ist vorgesehen, im Zuge des Herunterladens der Kalibrierdaten eine Freischaltung des Radarsensorkopfs 100 vorzunehmen ("Komponentenschutz"). Dadurch ist ermöglicht, dass der Radarsensorkopf 100 nur autorisiert verwendet wird, d.h. eine Manipulation verhindert werden kann, was insbesondere für automatisierte Fahrzeuge ein wichtiges Kriterium darstellt.

Die heruntergeladenen Kalibrierdaten sind erfindungsgemäß wenigstens eines aus Folgendem: typisches Rauschniveau der Antennen, Antenneneigenschaften, Amplituden- bzw. Phasenabweichungen der Antennen, Position von Antennenelementen, Temperatureigenschaften bzw. -gänge der Antennen.

Durch die Kalibrierdaten können z.B. Antenneneigenschaften, die durch einen technologischen Herstellungsprozess bedingt sind, angepasst bzw. kompensiert werden. Die Ermittlung der Kalibrierdaten bzw. die Kalibrierung des Radarsensorkopfs 100 erfolgt in der Regel einmalig beim Herstellungsvorgang, wobei die Anwendung der Kalibrierdaten im operativen Betrieb des Radarsensorkopfs 100 erfolgt. Mit Hilfe der Kalibrierdaten kann eine Verarbeitung von Signalen bzw. eine geeignete Ansteuerung der Antennen des Radarsensorkopfs durchgeführt werden.

Abweichungen des realen Antennendiagramms von einem idealen Antennendiagramm können durch sogenannte "globale Kalibrierungsmatrizen" beschrieben werden, die Abweichungen beschreiben, die durch Phasen- und Amplitudenfehler, sowie durch Rückkopplungen zwischen Kanälen entstehen (siehe auch Dissertation M. Schoor, "Hochauflösende Winkelschätzung für automobile Radarsysteme", 2010).

Durch die Anwendung der Kalibrierung mittels der zentralen Steuervorrichtung können vorteilhaft die Kosten im Radarsensorkopf 100 reduziert werden, da dort weniger Rechenleistung benötigt wird und auch weniger Verlustleistung an einer ungünstigen Stelle (z.B. aufgrund des Verbauorts des Radarsensorkopfs 100 im Fahrzeug) anfällt, wobei die Rechenleistung vorteilhaft an die zentrale Steuervorrichtung 120 ausgelagert wird. Dort skaliert die Rechenleistung im Vergleich zu den Kosten deutlich besser. Dies ermöglicht in der zentralen Steuervorrichtung die Durchführung von Berechnungsalgorithmen, die deutlich mehr Rechenleistung erfordern, als in einem Einzelsensor verfügbar sein könnte.

Der Radarsensorkopf 100 weist ferner einen Anschluss 80 an eine breitbandige Datenleitung (nicht dargestellt) auf, über die Daten an die zentrale Steuervorrichtung (nicht dargestellt) übertragen werden.

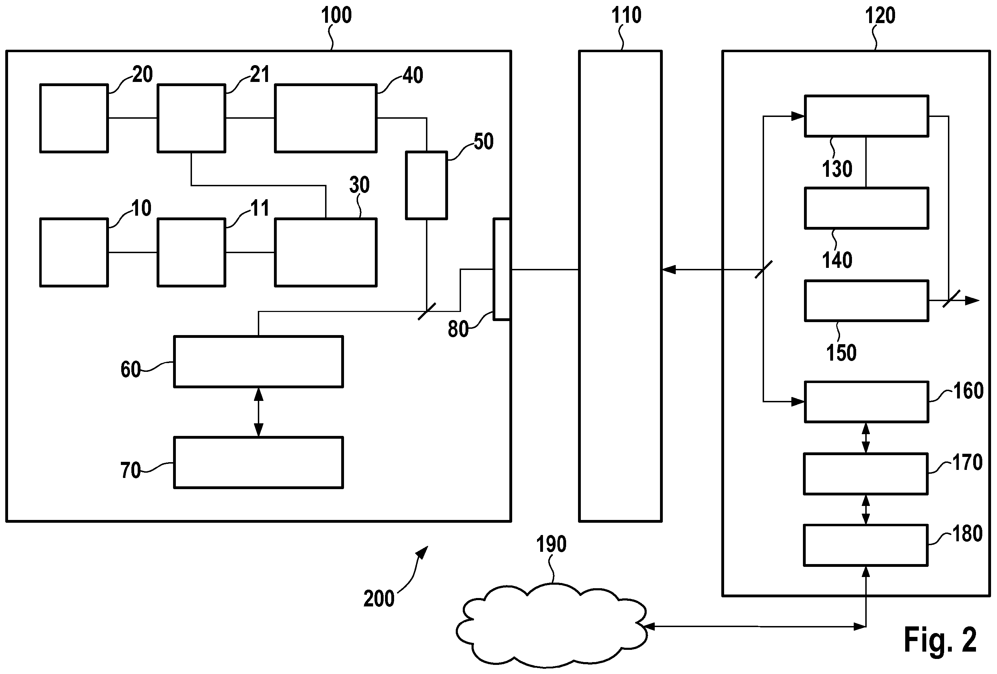

Fig. 2 zeigt ein prinzipielles Blockschaltbild eines mit dem vorgeschlagenen Radarsensorkopf 100 realisierten Radarsystems 200 für ein Fahrzeug. Vorgesehen ist, dass die transformierten digitalen Messdaten vom Radarsensorkopf 100 über eine breitbandige Datenleitung 110 an eine zentrale Steuervorrichtung 120 übertragen werden. Den übertragenen digitalen Messdaten wird mittels der im Radarsensorkopf 100 angeordneten ersten Steuerungseinheit 60 ein Zeitstempel zugeordnet und ebenfalls an die zentrale Steuervorrichtung 120 übertragen. Nachdem die Signalverarbeitung in der zentralen Steuervorrichtung 120 stattfindet, müssen die Kalibrierdaten dort vorliegen, wobei die Kalibrierdaten von einer Detektionseinheit 150 der zentralen Steuervorrichtung 120 verwendet werden.

Die zentrale Steuervorrichtung 120 kann die übertragenen digitalen Messdaten empfangen und weiterverarbeiten, z.B. mittels eines Speichers 130, einer Transformationseinheit 140 zum Durchführen einer Doppler-FFT, der Detektionseinheit 150 und einer zweiten Steuerungseinheit 160, die mit der ersten Steuerungseinheit 60 des Radarsensorkopfs 100 funktional interagiert. Durch die mit den Messdaten übertragenen Zeitstempel können diese zeitlich präzise eingeordnet werden.

Die zentrale Steuervorrichtung 120 weist mindestens einen Prozessor zum Verarbeiten von empfangenen Daten und mindestens einen Speicher 130 zum zumindest zeitweisen Speichern von Daten auf. Hierdurch kann die zentrale Steuervorrichtung 120 die durch die Datenleitung 110 übertragenen Messdaten vom Radarsensorkopf 100 zumindest zeitweise speichern und gemäß Anforderung der jeweiligen Anwendung verarbeiten, weiterleiten oder ausgeben. Die zentrale Steuervorrichtung 120 kann bei Bedarf durch eine leistungsfähigere Steuereinheit getauscht werden. Da in der zentralen Steuervorrichtung 120 vorzugsweise Mikroprozessoren verwendet werden, können anspruchsvolle Algorithmen zum Verarbeiten der Messdaten eingesetzt und somit genauere Berechnungsergebnisse (z.B. Winkelschätzungen) erzielt werden.

Die Kalibrierdaten werden nach erfolgtem Herunterladen in einem Kalibrierdatenspeicher 170 gespeichert. Das Herunterladen erfolgt über eine Anbindungseinheit 180, mittels der eine Anbindung an einen Server 190 erfolgt, von dem die Kalibrierdaten in den Kalibrierdatenspeicher 170 heruntergeladen werden. Das Radarsystem 200 kann beispielsweise als ein Chirp-Sequence-Radar ausgebildet sein, kann jedoch auch mit anderen Modulationsarten betrieben werden. Alternative Radarverfahren können beispielsweise langsame FMCW-Radare ohne eine nachträgliche Doppler-FFT, PN-Radare (Pseudo-Noise) mit einer Analyseeinheit als eine Korrelatorbank oder ein OFDM-Radar mit einer Analyseeinheit zum Durchführen einer spektralen Division sein. Im Radarsystem 200 ist die mindestens eine Zeitinformation durch eine im Radarsensorkopf 100 angeordnete erste Steuerungseinheit 60 erzeugbar. Die erste Steuerungseinheit 60 kann beispielsweise über die Datenleitung 110 übertragene Steuerbefehle empfangen und umsetzen und die digitalisierten Messdaten mit präzisen Zeitinformationen versehen. Des Weiteren kann die erste Steuerungseinheit 60 für eine Steuerung des Radarsensorkopfes 100 sowie beispielsweise zur Überwachungssteuerung oder eine Zyklussteuerung eingesetzt werden. Damit im Radarsystem 200 eine zeitliche Synchronisation stattfinden kann, müssen den übertragenen Messdaten von der ersten Steuerungseinheit 60 beispielsweise Zeitstempel für jeden übertragenen Chirp bzw.

Zyklus zugefügt werden, damit die zentrale Steuervorrichtung 120 die vom Radarsensorkopf 100 übertragenen Messdaten sinnvoll nutzen kann.

Der Oszillator 30 des Radarsensorkopfs 100 kann durch die zweite Steuerungseinheit 160 der zentralen Steuervorrichtung 120 eingestellt werden. Durch die Implementierung der ersten Steuerungseinheit 60 im Radarsensorkopf 100, die mit der zweiten Steuerungseinheit 160 funktional zusammenwirkt, kann vorteilhaft eine Steuerung der Komponenten des Radarsensorkopfes 100 durch die zentrale Steuervorrichtung 120 realisiert werden. Somit können auch der oder die Oszillatoren des Radarsensorkopfes 100 direkt oder indirekt gesteuert oder geregelt werden.

Oszillatoren eines Radarsystems 200 mit wenigstens zwei Radarsensorköpfen 100 (nicht dargestellt) sind durch die zentrale Steuervorrichtung 120 miteinander synchronisierbar. In einem Fahrzeug können mehrere voneinander beabstandete Radarsensorköpfe 100 verbaut und mit einer oder mehreren zentralen Steuervorrichtungen 120 über Datenverbindungen datenleitend verbunden sein. Durch die implementierten Steuereinheiten 60 in den unterschiedlichen Radarsensorköpfen 100 können bei einer Verwendung von mehreren Radarsensorköpfen 100 die jeweiligen Oszillatoren der Sendeantennen 10 miteinander synchronisiert werden. Auf diese Weise kann die Genauigkeit der Messergebnisse vorteilhaft gesteigert werden. Auf diese Weise können Fahrerassistenzfunktionen oder automatisierte Fahrfunktionen des Fahrzeugs optimiert werden. Darüber hinaus kann die Anzahl der verwendeten Radarsensorköpfe 100 ohne negative Einflüsse der Leistungsfähigkeit beliebig erhöht werden.

Denkbar ist auch, dass mehrere (z.B. drei) Radarsensorköpfe 100 über entsprechende Datenleitungen 110 mit einer zentralen Steuervorrichtung 120 verbunden sind (nicht dargestellt). Die zentrale Steuervorrichtung 120 gibt hierbei über die Datenleitungen 110 Steuerbefehle an die Steuereinheiten 60 der jeweiligen Radarsensorköpfe 100 aus, wodurch die unterschiedlichen Radarsensorköpfe 100 und insbesondere die jeweiligen Oszillatoren 30 optimal aufeinander abgestimmt und synchronisiert werden.

Eine nicht in Figuren dargestellte Ausführungsform des Radarsensorkopfs sieht vor, dass dieser zusammen mit der zentralen Steuervorrichtung in einem "Vollsensor" angeordnet ist, wobei eine Identifizierung des Vollsensors und ein damit verbundenes Herunterladen von Kalibrierdaten auf den Vollsensor realisierbar ist.

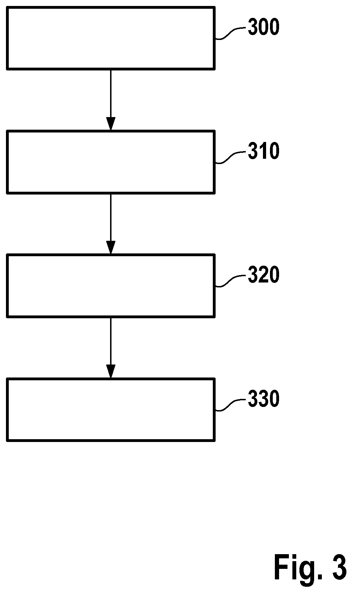

Fig. 3 zeigt einen prinzipiellen Ablauf eines Verfahrens zum Herstellen eines Radarsensorkopfs 100 für ein Radarsystem 200, wobei das Verfahren nicht Teil der Erfindung ist.

In einem Schritt 300 wird ein Bereitstellen mindestens einer Sendeantenne 10 zum Erzeugen von Radarwellen durchgeführt.

In einem Schritt 310 wird ein Bereitstellen mindestens einer Empfangsantenne 20 zum Empfangen von Radarwellen durchgeführt.

In einem Schritt 320 wird ein Bereitstellen einer Schnittstelle 80 zum Anschließen des Radarsensorkopfs 100 an eine Datenleitung 110 durchgeführt.

In einem Schritt 330 wird ein Bereitstellen einer Identifizierungseinheit 70 zum Identifizieren des Radarsensorkopfs durchgeführt, wobei mittels der Identifizierungseinheit ein Herunterladen von Kalibrierdaten des Sensorkopfs auf eine zentrale Steuervorrichtung initiierbar ist.

## Patentansprüche

1. Radarsensorkopf (100) für ein Radarsystem, aufweisend:
- mindestens eine Sendeantenne (10) zum Erzeugen und mindestens eine Empfangsantenne (20) zum Empfangen von Radarwellen;
- eine Schnittstelle (80) zum Anschließen des Radarsensorkopfs (100) an eine Datenleitung (110); **gekennzeichnet durch**
- eine Identifizierungseinheit (70) zum Authentifizieren des Radarsensorkopfs gegenüber einer extern vom Radarsensorkopf (100) angeordneten zentralen Steuervorrichtung (120),
- wobei mittels der Identifizierungseinheit (70) eine Sensor-ID übertragen wird, und
- wobei die Identifizierungseinheit (70) eingerichtet ist, im Zuge einer Authentifizierung des Radarsensorkopfes (100) gegenüber der zentralen Steuervorrichtung (120) ein Herunterladen von Kalibrierdaten des Sensorkopfs (100) von einem Server (190) auf die zentrale Steuervorrichtung (120) zu initiieren,
- und im Zuge des Herunterladens eine Freischaltung des Radarsensorkopfes (100) vorzunehmen,
- wobei die Kalibrierdaten wenigstens eines aus Folgendem sind: typisches Rauschniveau, Antenneneigenschaften, Amplituden/Phasenabweichungen, Position der Antennenelemente, Temperatureigenschaften, Temperaturgang.

2. Radarsensorkopf (100) nach Anspruch 1, ferner aufweisend eine Vorverarbeitungseinheit (50) zum definierten Vorverarbeiten von Empfangsdaten.

3. Radarsensorkopf (100) nach Anspruch 1 oder 2, **dadurch gekennzeichnet, dass** die Kalibrierdaten mittels der Identifizierungseinheit (70) aktualisiert werden.

4. Radarsensorkopf (100) nach einem der Ansprüche 1 bis 3, **dadurch gekennzeichnet, dass** die Identifizierungseinheit (70) eingerichtet ist, um das Herunterladen der Kalibrierdaten drahtlos oder drahtgebunden durchzuführen.

5. Radarsensorkopf (100) nach einem der vorhergehenden Ansprüche, **dadurch gekennzeichnet, dass** mittels der Identifizierungseinheit (70) die Sensor-ID verschlüsselt oder signiert übertragen wird.

6. Radarsensorkopf (100) nach einem der vorhergehenden Ansprüche, **dadurch gekennzeichnet, dass** als Sensor-ID ein Public Key eines Verschlüsselungsverfahrens übertragen wird.

7. Radarsensorkopf (100) nach einem der vorhergehenden Ansprüche, **dadurch gekennzeichnet, dass** die von der mindestens einen Empfangsantenne (20) empfangenen Radarwellen durch einen in einer Auswerteeinheit (40) des Radarsensorkopfes (100) angeordneten Analog-Digital-Wandler (40) in digitale Messdaten gewandelt und mit mindestens einer Zeitinformation (Z) markiert werden.

8. Radarsystem (200), aufweisend:
- wenigstens einen Radarsensorkopf (100) nach einem der Ansprüche 1 bis 7;
- die extern vom Radarsensorkopf (100) ausgebildete zentrale Steuervorrichtung (120) nach Anspruch 1, zum Senden von Daten und zum Verarbeiten von empfangenen Daten, wobei die zentrale Steuervorrichtung (120) eine Anbindungseinheit an den Server (190) zum Herunterladen von Kalibierdaten auf die zentrale Steuervorrichtung (120) aufweist; und
- eine Datenleitung (110) zwischen der zentralen Steuervorrichtung (120) und dem wenigstens einen Radarsensorkopf (100).

9. Radarsystem (200) nach Anspruch 8, wobei die zentrale Steuervorrichtung (120) wenigstens einen Kalibrierdatenspeicher (130) aufweist.

## Claims

1. Radar sensor head (100) for a radar system, comprising:
- at least one transmitting antenna (10) for generating radar waves and at least one receiving antenna (20) for receiving radar waves;
- an interface (80) for connecting the radar sensor head (100) to a data line (110); **characterized by**
- an identification unit (70) for authenticating the radar sensor head with respect to a central control device (120) arranged outside the radar sensor head (100),
- wherein a sensor ID is transmitted by means of the identification unit (70),
and
- wherein the identification unit (70) is configured to initiate a download of calibration data for the sensor head (100) from a server (190) to the central control device (120) when authenticating the radar sensor head (100) with respect to the central control device (120),
- and to activate the radar sensor head (100) during the download,
- wherein the calibration data are at least one of the following: typical noise level, antenna properties, amplitudes/phase deviations, position of the antenna elements, temperature properties, temperature response.

2. Radar sensor head (100) according to Claim 1, further comprising a preprocessing unit (50) for the defined preprocessing of received data.

3. Radar sensor head (100) according to Claim 1 or 2, **characterized in that** the calibration data are updated by means of the identification unit (70).

4. Radar sensor head (100) according to one of Claims 1 to 3, **characterized in that** the identification unit (70) is configured to download the calibration data in a wireless or wired manner.

5. Radar sensor head (100) according to one of the preceding claims, **characterized in that** the sensor ID is transmitted in encrypted or signed form by means of the identification unit (70).

6. Radar sensor head (100) according to one of the preceding claims, **characterized in that** a public key of an encryption method is transmitted as the sensor ID.

7. Radar sensor head (100) according to one of the preceding claims, **characterized in that** the radar waves received by the at least one receiving antenna (20) are converted into digital measurement data by an analogue/digital converter (40) arranged in an evaluation unit (40) of the radar sensor head (100) and are marked with at least one item of time information (Z).

8. Radar system (200) comprising:
- at least one radar sensor head (100) according to one of Claims 1 to 7;
- the central control device (120) according to Claim 1, formed outside the radar sensor head (100), for sending data and for processing received data, wherein the central control device (120) has a connection unit to the server (190) for downloading calibration data to the central control device (120); and
- a data line (110) between the central control device (120) and the at least one radar sensor head (100).

9. Radar system (200) according to Claim 8, wherein the central control device (120) has at least one calibration data memory (130).

## Revendications

1. Tête de capteur radar (100) pour un système radar, comprenant :
- au moins une antenne émettrice (10) destinée à générer des ondes radar et au moins une antenne réceptrice (20) destinée à recevoir des ondes radar ;
- une interface (80) destinée à connecter la tête de capteur radar (100) à une ligne de données (110) ; **caractérisée par**
- une unité d'identification (70) destinée à authentifier la tête de capteur radar vis-à-vis d'un dispositif de commande central (120) disposé à l'extérieur de la tête de capteur radar (100),
- un identifiant de capteur étant transmis au moyen de l'unité d'identification (70), et
- l'unité d'identification (70) étant conçue pour, dans le cadre d'une authentification de la tête de capteur radar (100) vis-à-vis du dispositif de commande central (120), initier un téléchargement de données d'étalonnage de la tête de capteur (100) depuis un serveur (190) vers le dispositif de commande central (120),
- et, dans le cadre du téléchargement, procéder à un déblocage de la tête de capteur radar (100),
- les données d'étalonnage étant au moins l'une des suivantes : niveau de bruit typique, propriétés de l'antenne, écarts d'amplitude/de phase, position des éléments d'antenne, caractéristiques de température, variation de température.

2. Tête de capteur radar (100) selon la revendication 1, possédant en outre une unité de prétraitement (50) destinée au prétraitement défini de données de réception.

3. Tête de capteur radar (100) selon la revendication 1 ou 2, **caractérisée en ce que** les données d'étalonnage sont actualisées au moyen de l'unité d'identification (70).

4. Tête de capteur radar (100) selon l'une des revendications 1 à 3, **caractérisée en ce que** l'unité d'identification (70) est conçue pour effectuer le téléchargement des données d'étalonnage sans fil ou de manière filaire.

5. Tête de capteur radar (100) selon l'une des revendications précédentes, caractérisée en ce l'identifiant du capteur est transmis crypté ou signé par l'unité d'identification (70).

6. Tête de capteur radar (100) selon l'une des revendications précédentes, **caractérisée en ce qu'**une clé publique d'un procédé de cryptage est transmise en tant qu'identifiant du capteur.

7. Tête de capteur radar (100) selon l'une des revendications précédentes, **caractérisée en ce que** les ondes radar reçues par l'au moins une antenne réceptrice (20) sont converties en données de mesure numériques par un convertisseur analogique-numérique (40) disposé dans une unité d'évaluation (40) de la tête de capteur radar (100) et sont marquées avec au moins une information temporelle (Z).

8. Système radar (200), possédant :
- au moins une tête de capteur radar (100) selon l'une des revendications 1 à 7 ;
- le dispositif de commande central (120) selon la revendication 1, réalisé à l'extérieur de la tête de capteur radar (100) , destiné à envoyer des données et à traiter des données reçues, le dispositif de commande central (120) possédant une unité de connexion au serveur (190) pour le téléchargement de données d'étalonnage sur le dispositif de commande central (120) ; et
- une ligne de données (110) entre le dispositif de commande central (120) et l'au moins une tête de capteur radar (100).

9. Système radar (200) selon la revendication 8, le dispositif de commande central (120) possédant au moins une mémoire de données d'étalonnage (130).
